# DEMANDE DE BREVET EUROPEEN

(11) **EP 2 980 470 A1**
(43) Date de publication de la demande: **03.02.2016**
(21) Numéro de dépôt: 15178283.6
(22) Date de dépôt: 24.07.2015
(51) Int. Cl.: F21S 8/10, F21V 7/00, H04N 5/74, G02B 19/00, G02B 27/09, G02B 27/14, F21Y 105/00

(54) **SYSTÈME LUMINEUX, NOTAMMENT POUR VÉHICULE AUTOMOBILE**

(30) Priorité: 31.07.2014 FR 1457417
(71) Demandeur: VALEO VISION, 93012 Bobigny Cedex (FR)
(72) Inventeur: COURCIER, Marine, 75004 Paris (FR); SANCHEZ, Vanesa, 92270 Bois Colombes (FR); HUE, David, 95430 Butry sur Oise (FR)

(57) **Abrégé**

L'invention concerne un système (1) lumineux, notamment pour véhicule automobile, comportant un système (3) optique de projection selon un axe optique (XX') et au moins une première matrice (2) à au moins une dimension de sources lumineuses adressables sélectivement, ladite première matrice (2) coopérant avec le système (3) optique de projection pour former un premier faisceau lumineux. Le système (1) lumineux comporte en outre au moins un sous-système (5) de recombinaison interposé entre le système (3) optique de projection et ladite première matrice (2), ledit sous-système (5) de recombinaison comportant une deuxième matrice (51) à au moins une dimension de sources lumineuses adressables sélectivement, ladite deuxième matrice (51) s'étendant transversalement par rapport à la première matrice (2), et un élément (52) de recombinaison, la deuxième matrice (51) interagissant avec l'élément (52) de recombinaison pour former un second faisceau lumineux, ledit premier faisceau lumineux et ledit deuxième faisceau lumineux produisant respectivement, dans un plan perpendiculaire à l'axe optique (XX'), une première nappe lumineuse et une deuxième nappe lumineuse spatialement complémentaires.

## Description

La présente invention concerne de manière générale la génération de faisceaux d'éclairage, notamment pour les véhicules automobiles. L'invention concerne plus précisément la génération de faisceaux d'éclairage pixellisé.

On connaît déjà des systèmes d'éclairage pixellisé utilisant une matrice à deux dimensions de diodes électroluminescentes placée dans le plan focal d'un système de projection optique. Les différentes diodes électroluminescentes de la matrice sont adressables, de sorte qu'il est possible, par l'intermédiaire d'un module électronique de contrôle, d'allumer ou d'éteindre chacune de ces diodes de façon sélective, et d'adapter ainsi le faisceau obtenu devant le véhicule en fonction des exigences de la route.

Or, ces systèmes à imagerie directe laissent apparaître des zones non éclairées ou moins éclairées entre chaque zone lumineuse créée par les différentes diodes électroluminescentes. Un tel éclairage inhomogène résulte du fait que ces sources lumineuses ne peuvent pas être totalement jointives les unes à côté des autres, la technologie employée pour ces sources imposant une distance minimum entre chaque source.

Par ailleurs, la demande FR 2 991 251 au nom de la Demanderesse décrit un ensemble de modules permettant de réaliser un faisceau d'éclairage matriciel par entrelacement de segments lumineux. Le faisceau obtenu présente une homogénéité améliorée, mais le système est peu compact et reste difficile à intégrer dans un projeteur automobile dans lequel le volume est relativement restreint.

La présente invention a pour but de pallier les limitations des solutions existantes en proposant un système compact, sur la base de matrices à deux dimensions de diodes électroluminescentes, qui permette d'obtenir un faisceau d'éclairage pixellisé homogène.

Pour ce faire, la présente invention a pour objet un système lumineux, notamment pour véhicule automobile, comportant un système optique de projection selon un axe optique et au moins une première matrice à au moins une dimension de sources lumineuses adressables sélectivement, ladite première matrice coopérant avec ledit système optique de projection pour former un premier faisceau lumineux, ledit système lumineux étant caractérisé en ce qu'il comporte en outre au moins un sous-système de recombinaison interposé entre le système optique de projection et ladite première matrice, ledit sous-système de recombinaison comportant une deuxième matrice à au moins une dimension de sources lumineuses adressables sélectivement, ladite deuxième matrice s'étendant transversalement par rapport à la première matrice, et un élément de recombinaison, la deuxième matrice interagissant avec l'élément de recombinaison pour former un second faisceau lumineux, ledit premier faisceau lumineux et ledit deuxième faisceau lumineux produisant respectivement, dans un plan perpendiculaire à l'axe optique, une première nappe lumineuse et une deuxième nappe lumineuse spatialement complémentaires.

Ainsi, la deuxième matrice coopére avec l'élément de recombinaison et le système optique de projection pour former le deuxième faisceau lumineux.

On entend par source lumineuse aussi bien la zone émettrice de lumière d'un composant par exemple de type diode ou plaque de phosphore qu'une source secondaire générée à partir de cette zone émettrice par une optique primaire.

Le terme "transversal" et ses déclinaisons (« transversalement »...) signifient ici "non parallèle", et avantageusement "perpendiculaire".

Les termes "nappes spatialement complémentaires" s'entendent pour des nappes conformées de sorte que lorsque toutes les sources lumineuses des matrices sont allumées, la combinaison des nappes formant un faisceau de forme prédéterminée et dépourvu de zones sombres. En d'autres termes, les nappes s'unissent de façon continue dans l'espace délimité par la forme prédéterminée.

Par exemple, les nappes peuvent présenter des formes non connexes.

Dans un mode de réalisation, les nappes sont complémentaires. C'est à-dire, conformées de sorte que chaque nappe présente au moins une zone sombre délimitée par une limite claire-obscure et qu'au moins un autre nappe présente une zone éclairée délimitée par une limite obscure-claire, les limites obscure-claire et claire-obscure se superposant exactement lors de la combinaison des nappes.

Dans un autre mode de réalisation, les nappes se superposent au moins partiellement lors de leur combinaison.

Ces caractéristiques offrent l'avantage de fournir un système réalisant un faisceau homogène.

Le système optique de projection peut comporter une seule optique de projection, ou en variante comporter une optique de projection et une optique déformante coopérant avec ladite optique de projection. Dans ce dernier cas, le plan focal du système optique de projection est le plan focal de l'ensemble optique de projection - optique déformante.

Avantageusement, les première et deuxième matrices présentent des dimensions identiques. En variante, la première matrice pourrait comporter une ligne de zones émettrices jointives et la deuxième matrice pourrait comporter deux lignes séparées verticalement de la hauteur d'une ligne.

L'élément de recombinaison est agencé pour que la lumière émise par la première matrice traverse cet élément de recombinaison vers le système optique de projection pour former le premier faisceau lumineux et pour que la lumière émise par la deuxième matrice soit réfléchie par cet élément de recombinaison vers le système optique de projection pour former le deuxième faisceau lumineux. De préférence, la première matrice et la deuxième matrice sont équidistantes, au sens du chemin optique, de l'élément de recombinaison.

Avantageusement, les sources lumineuses des première et deuxième matrices sont aptes à émettre de la lumière d'une même longueur d'onde, notamment blanche.

Les sources lumineuses de la première matrice peuvent être disposées selon un premier damier et les sources lumineuses de la deuxième matrice peuvent être disposées selon un deuxième damier. Le cas échéant, le premier damier est complémentaire au deuxième damier.

Si on le souhaite, le système optique de projection peut comporter au moins une lentille et/ou au moins un réflecteur.

Selon un premier mode de réalisation, l'élément de recombinaison est une lame semi-réfléchissante transparente pour les faisceaux lumineux issus de la première matrice et réfléchissante au moins en partie pour les faisceaux lumineux issus de la deuxième matrice. Les sources lumineuses de la première matrice et de la deuxième matrice sont alors alimentées simultanément.

En variante, l'élément de recombinaison peut être un diviseur de faisceau, par exemple de type élément biréfringent ou de type élément dichroïque.

Selon un deuxième mode de réalisation, l'élément de recombinaison est un moyen d'obturation apte à occuper deux états, un premier état dans lequel le moyen d'obturation est transparent pour les faisceaux lumineux issus de la première matrice, et un deuxième état dans lequel les faisceaux lumineux issus de la deuxième matrice sont réfléchis selon l'axe optique. Dans ce cas, les sources lumineuses de la première matrice et de la deuxième matrice sont alimentées alternativement de sorte que seules des sources lumineuses de la première matrice sont allumées lorsque le moyen d'obturation est dans son premier état, et seules des sources lumineuses de la deuxième matrice sont allumées lorsque le moyen d'obturation est dans son deuxième état.

La fréquence minimum de variation entre les premier et deuxième états peut par exemple être supérieure à 100Hz.

L'élément de recombinaison comporte par exemple une matrice de micro-miroirs, chaque micro-miroir étant apte à présenter lesdits premier et deuxième états. Chaque micro-miroir peut être agencé de manière à être enroulé pour présenter le premier état et déroulé pour présenter le deuxième état.

L'élément de recombinaison peut être plan.

En variante, l'élément de recombinaison est courbé. On peut choisir notamment un profil courbé apte à étaler le faisceau lumineux transversalement à l'axe optique.

Dans ce dernier cas, l'élément de recombinaison est associé de préférence à une optique secondaire interposée entre la première matrice et l'élément de recombinaison et apte à compenser des déformations générées par l'élément de recombinaison. L'optique secondaire permet également avantageusement d'étaler les pixels de la deuxième matrice de la même façon que ceux de la première.

Selon d'autres particularités possibles du deuxième mode de réalisation :
- l'allumage des sources lumineuses de la première matrice et l'allumage des sources lumineuses de la deuxième matrice sont pilotés respectivement par un premier signal et un deuxième signal sensiblement en opposition de phase ;
- le premier signal et un deuxième signal ont des rapports cycliques avantageusement ajustables ;
- le basculement du moyen d'obturation entre son premier état et son deuxième état est piloté par un troisième signal sensiblement synchronisé avec le premier et/ou le deuxième signal ;
- le premier signal, le deuxième signal et le troisième signal sont de préférence générés par un même module électronique de contrôle.

L'invention a également pour objet un projecteur d'éclairage pour véhicule automobile, comportant au moins un système lumineux tel que défini ci-dessus.

L'invention et les différents avantages qu'elle procure seront mieux compris au vu de la description suivante, faite en référence aux figures annexées, dans lesquelles :
- la figure 1 illustre schématiquement la composition d'un système lumineux conforme à l'invention ;
- les figures 2a et 2b sont des exemples de nappes lumineuses spatialement complémentaires obtenues avec un système lumineux conforme à l'invention ;
- la figure 3 représente schématiquement le fonctionnement d'un système lumineux selon une premier mode de réalisation de l'invention ;
- les figures 4a et 4b représentent schématiquement le fonctionnement d'un système lumineux selon un deuxième mode de réalisation de l'invention ;
- les figures 5a et 5b illustrent deux exemples de signaux de commandes pour piloter différents composants du système lumineux selon le deuxième mode de réalisation de l'invention ;
- la figure 6 illustre schématiquement une variante de réalisation d'un système lumineux selon le deuxième mode de réalisation ;
- la figure 7 illustre schématiquement une autre variante de réalisation d'un système lumineux selon le deuxième mode de réalisation.

Dans la suite, les éléments communs aux différentes figures portent les mêmes références.

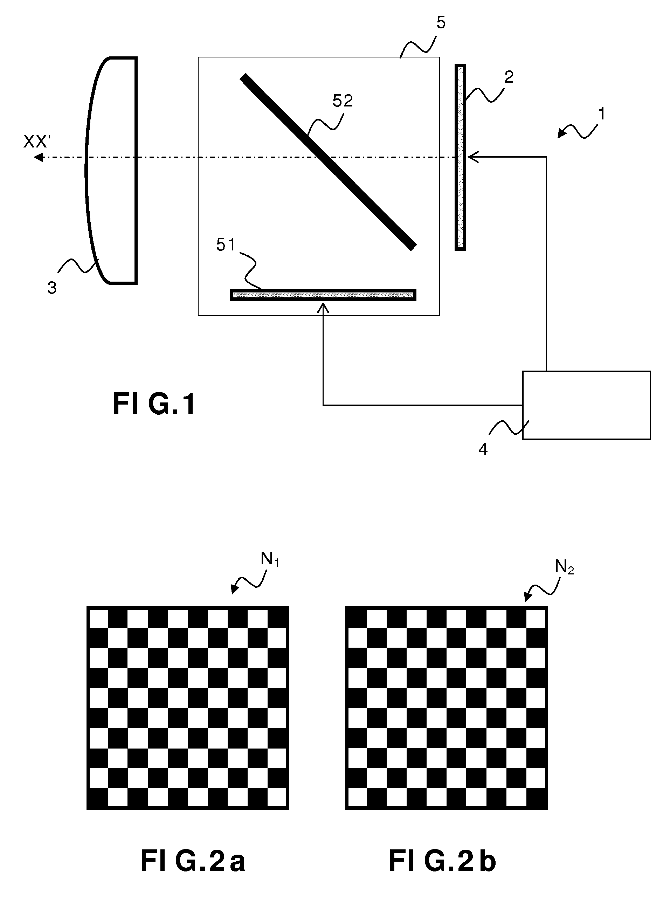

En référence à la figure 1, un système lumineux 1 se présente sous la forme d'un module d'éclairage pixellisé comporte une première matrice 2 à deux dimensions de diodes électroluminescentes. La matrice 2 s'étend dans le plan focal d'un système 3 optique de projection d'axe optique XX'. Les diodes électroluminescentes de la matrice 2 sont adressables sélectivement, et peuvent être ainsi individuellement allumées ou éteintes sous la commande d'un module 4 électronique de contrôle. Les diodes de la matrice 2 et le système 3 de projection coopèrent pour la formation d'un premier faisceau lumineux selon l'axe optique XX' en sortie du système 3 de projection.

Conformément à l'invention, le système lumineux 1 comporte en outre un sous-système 5 de recombinaison interposé entre le système 3 optique de projection et la première matrice 2. Ce sous-système 5 comporte :
- une deuxième matrice 51 à deux dimensions de diodes électroluminescentes adressables sélectivement ; et
- un élément 52 de recombinaison dont la nature et le rôle seront explicités par la suite, en référence à différents modes de réalisation.

Comme visible sur la figure 1, la deuxième matrice 51 s'étend transversalement, par exemple perpendiculairement, par rapport à la première matrice 2. L'élément 52 de recombinaison se retrouve quant à lui à la fois sur le trajet de l'éclairage provenant de la première matrice 2 et sur le trajet de l'éclairage provenant de la deuxième matrice 51. La deuxième matrice 51 interagit avec l'élément 52 de recombinaison pour former un second faisceau lumineux.

Les diodes électroluminescentes de la deuxième matrice 51 peuvent être individuellement allumées ou éteintes, de préférence sous la commande du même module 4 électronique de contrôle.

Les matrices 2 et 51 peuvent être réalisées à partir de toutes diodes électroluminescentes issues de technologies conventionnelles, disposées de préférence sur un substrat commun.

Conformément à l'invention, le système lumineux 1 est configuré pour que le premier faisceau lumineux et le deuxième faisceau lumineux produisent respectivement, dans un plan perpendiculaire à l'axe optique XX', une première nappe lumineuse et une deuxième nappe lumineuse spatialement complémentaires.

Un exemple de nappes lumineuses obtenues selon ce principe est illustré sur les figures 2a et 2b. Plus précisément, la figure 2a représente la nappe lumineuse N₁ produite dans un plan perpendiculaire à l'axe optique XX' à partir des diodes électroluminescentes de la première matrice 2, et la figure 2b représente la nappe lumineuse N₂ produite dans ce même plan perpendiculaire à l'axe optique XX' à partir des diodes électroluminescentes de la deuxième matrice 51. Dans cet exemple, les deux matrices 2 et 51 sont identiques, et composées de cent diodes électroluminescentes réparties régulièrement dans un carré selon dix lignes et dix colonnes. En superposant selon un même étalement vertical les deux nappes N₁ et N₂ obtenues, on obtient une nappe lumineuse globale d'homogénéité sensiblement améliorée, grâce à la complémentarité spatiale des deux nappes N₁ et N₂. D'autres motifs de nappe lumineuse globale peuvent bien entendu être obtenus selon ce même principe de complémentarité spatial, selon le faisceau d'éclairage que l'on souhaite projeter. Dans une variante non représentée, le système lumineux peut comporter une pluralité de modules comportant chacun deux matrices et un système de recombinaison. Dans une autre variante non représentée, le système lumineux peut comporter un unique module ayant trois matrices et deux systèmes de recombinaison.

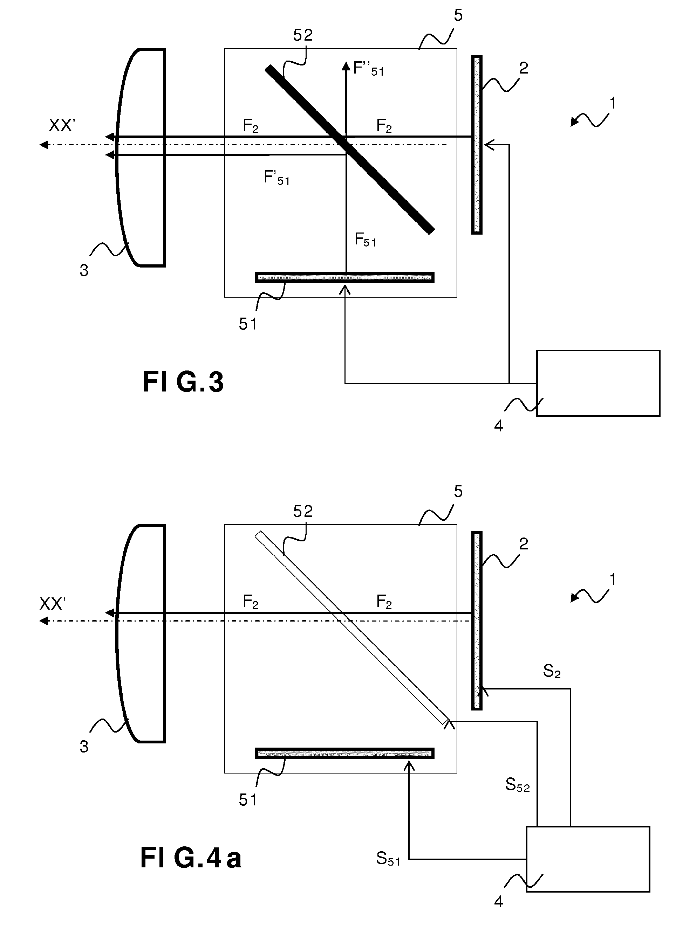

La figure 3 précise la nature et la fonction de l'élément 52 de recombinaison selon un premier mode de réalisation de l'invention. Ici, l'élément 52 de recombinaison est une lame semi-réfléchissante positionnée de manière à laisser passer au moins partiellement, par exemple à 50%, un faisceau lumineux F₂ issu de la matrice 2, et à réfléchir au moins partiellement, dans la direction générale de l'axe optique XX', un faisceau lumineux F₅₁ issu de la matrice 51. En pratique, le faisceau lumineux F₅₁ se retrouve ainsi séparé en un premier faisceau F'₅₁ en direction du système 3 de projection, et en un deuxième faisceau F"₅₁. Les diodes électroluminescentes de la première matrice 2 et de la deuxième matrice 51 qui doivent être sélectivement allumées pour obtenir des nappes lumineuses complémentaires spatialement (par exemple selon les motifs des figures 2a et 2b) sont alimentées simultanément.

Le système lumineux 1de la figure 3 permet de réduire la distance entre chaque pixel émis. Néanmoins, le gain en homogénéité reste limité en raison des pertes optiques dues à l'utilisation d'une lame semi-réfléchissante, qui peuvent être de l'ordre de 50% du faisceau initial.

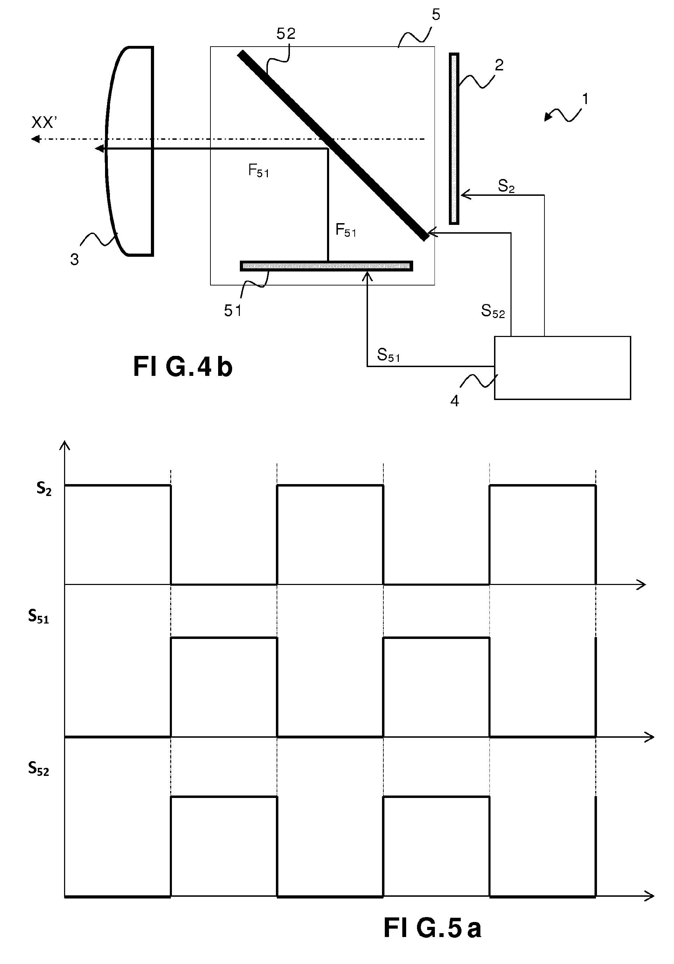

Un mode de réalisation préféré ne présentant pas cet inconvénient lié aux pertes optiques va à présent être décrit en référence aux figures 4a et 4b. Conformément à ce deuxième mode de réalisation, l'élément 52 de recombinaison est ici composé d'un moyen d'obturation apte à commuter dans deux états possibles :
- un premier état dans lequel le module 52 d'obturation est transparent pour un faisceau lumineux F₂ issu de la première matrice 2 dans la direction générale de l'axe optique XX' (voir figure 4a);
- un deuxième état dans lequel le module 52 d'obturation est réfléchissant pour le faisceau lumineux F₅₁ issu de la deuxième matrice 51, ce dernier étant réfléchi intégralement dans la direction générale de l'axe optique XX' vers le système 3 de projection (voir figure 4b).

Le moyen 52 d'obturation est réalisé avantageusement sous la forme d'une matrice d'obturateurs micro-électromécaniques qui peuvent être commandés individuellement pour occuper le premier ou le deuxième état mentionnés ci-dessus. Le document US 7, 684, 105 décrit un exemple de mise en oeuvre possible de cette technologie. Le même module 4 électronique de contrôle permet de préférence de piloter :
- au moyen d'un signal S₂, l'alimentation des diodes électroluminescentes qui doivent être allumées sur la première matrice 2;
- au moyen d'un signal S₅₁, l'alimentation des diodes électroluminescentes qui doivent être allumées sur la deuxième matrice 51;
- au moyen d'un signal S₅₂, l'alimentation des micro-obturateurs pour permettre au moyen 52 d'obturation de basculer entre le premier état et le deuxième état.

La figure 5a illustre un exemple des signaux de pilotage utilisés pour le fonctionnement du système lumineux 1selon le deuxième mode de réalisation. Par convention, un signal S₂ ou S₅₁ à l'état haut correspond à un ordre d'allumage des diodes des matrices 2 et 51, alors qu'un état bas correspond à l'extinction de ces diodes électroluminescentes. Un signal S₅₂ à l'état haut correspond au cas où le moyen obturateur 52 est réfléchissant (deuxième position représentée à la figure 4b), alors qu'un état bas correspond au cas où le moyen obturateur 5 est transparent (première position représentée à la figure 4a). Comme on le voit à l'allure des signaux S₂ et S₅₂, les matrices 2 et 52 sont pilotées en parfaite alternance grâce à deux signaux en opposition de phase. Le signal S₅₂ pilotant le moyen d'obturation 52 est en revanche calqué sur le signal S₅₁. La figure 5a représente néanmoins un cas idéal qui ne prend pas en compte les retards de commutation du moyen d'obturation 52.

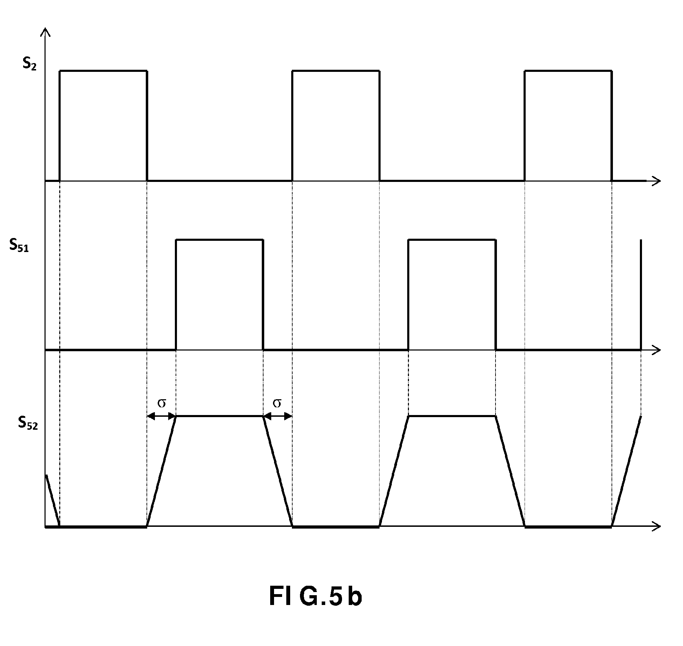

La figure 5b illustre un autre exemple de signaux de pilotage qui prend en compte le retard σ de commutation du moyen d'obturation 52.

Les paramètres de pilotage des matrices 2 et 51 peuvent être optimisés pour améliorer l'efficacité et pour ajuster l'homogénéité de du faisceau. En particulier, il est possible de jouer sur les rapports cycliques des signaux S₂ et S₅₁. Dans un mode de réalisation préféré, les diodes électroluminescentes sont pulsées à un courant supérieur au courant nominal mais un mode de pilotage des diodes en continu est aussi envisageable.

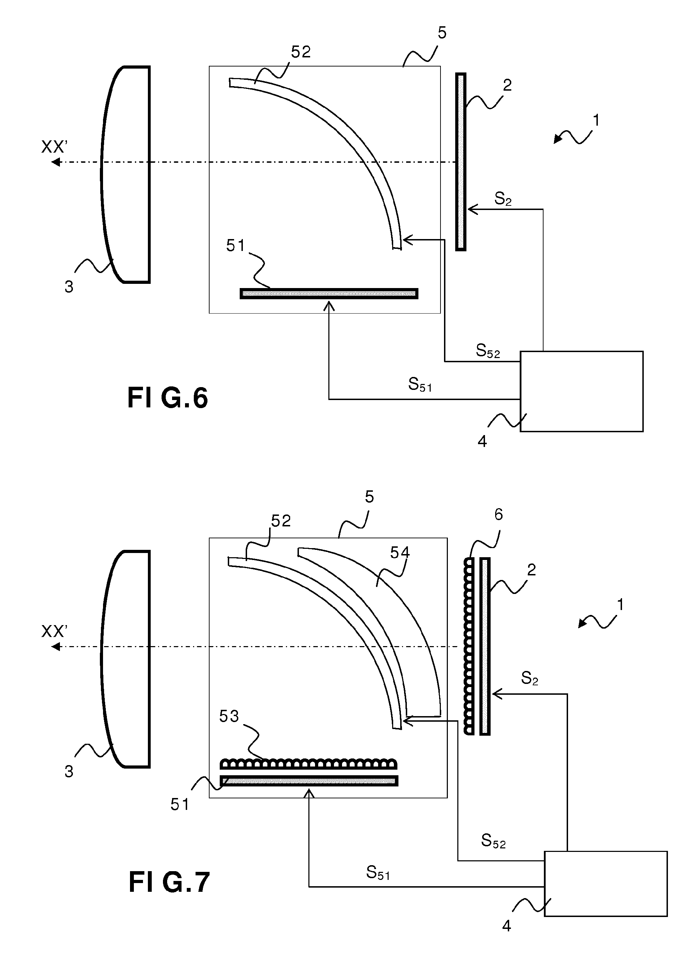

Dans le cas des figures 5a et 5b, le moyen 52 d'obturation est plan. Dans d'autres cas, tels que celui représenté sur la figure 6, on utilise avantageusement un moyen 52 d'obturation courbé, conformé pour modifier la forme des images en réflexion, en particulier pour étaler le faisceau dû à la matrice 52. Cette variante de réalisation permet ainsi de réduire le nombre de diodes électroluminescentes nécessaires, et donc la taille et l'encombrement de la matrice 52.

Pour compenser des déformations générées et étaler la nappe transmise de la même manière que la nappe réfléchie par le moyen d'obturation courbe 52, ce dernier peut être associé à une optique secondaire 54, interposée, comme représentée sur la figure 7 entre la première matrice 2 et le moyen d'obturation 52. Par ailleurs, les matrices 2, 51 de diodes électroluminescentes peuvent être chacune avantageusement associée à une optique primaire, respectivement référencée 6 et 53, telle qu'un réseau de micro lentilles ou de guides de lumière.

Une autre possibilité (non représentée) consiste à ajouter deux optiques intermédiaires déformantes, une première optique déformante entre la deuxième matrice 51 et le moyen d'obturation 52 plan des figures 5a, 5b, et deuxième optique déformante entre la première matrice 2 et le moyen d'obturation 52, afin de compenser les déformations introduites par la première optique déformante sur les rayons transmis).

## Revendications

1. Système (1) lumineux, notamment pour véhicule automobile, comportant un système (3) optique de projection selon un axe optique (XX') et au moins une première matrice (2) à au moins une dimension de sources lumineuses adressables sélectivement, ladite première matrice (2) coopérant avec ledit système (3) optique de projection pour former un premier faisceau lumineux, ledit système lumineux (1) étant **caractérisé en ce qu'**il comporte en outre au moins un sous-système (5) de recombinaison interposé entre le système (3) optique de projection et ladite première matrice (2), ledit sous-système (5) de recombinaison comportant une deuxième matrice (51) à au moins une dimension de sources lumineuses adressables sélectivement, ladite deuxième matrice (51) s'étendant transversalement par rapport à la première matrice (2), et un élément (52) de recombinaison, la deuxième matrice (51) interagissant avec l'élément (52) de recombinaison pour former un second faisceau lumineux, ledit premier faisceau lumineux et ledit deuxième faisceau lumineux produisant respectivement, dans un plan perpendiculaire à l'axe optique (XX'), une première nappe lumineuse et une deuxième nappe lumineuse spatialement complémentaires.

2. Système (1) selon la revendication 1, **caractérisé en ce que** l'élément (52) de recombinaison est agencé pour être transparent pour les faisceaux lumineux issus de la première matrice (2) et réfléchissant au moins en partie pour les faisceaux lumineux issus de la deuxième matrice (51).

3. Système (1) selon la revendication 2, **caractérisé en ce que** l'élément (52) de recombinaison est une lame semi-réfléchissante.

4. Système (1) selon l'une quelconque des revendications 2 ou 3, **caractérisé en ce que** les sources lumineuses de la première matrice (2) et de la deuxième matrice (51) sont alimentées simultanément.

5. Système (1) selon la revendication 1, **caractérisé en ce que** l'élément (52) de recombinaison est un moyen d'obturation apte à occuper deux états, un premier état dans lequel le moyen d'obturation est transparent pour les faisceaux lumineux issus de la première matrice (2), et un deuxième état dans lequel les faisceaux lumineux issus de la deuxième matrice (51) sont réfléchis selon l'axe optique (XX').

6. Système (1) selon la revendication 5, **caractérisé en ce que** les sources lumineuses de la première matrice (2) et de la deuxième matrice (51) sont alimentées alternativement de sorte que seules des sources lumineuses de la première matrice (2) sont allumées lorsque le moyen d'obturation (52) est dans son premier état, et seules des sources lumineuses de la deuxième matrice (51) sont allumées lorsque le moyen d'obturation (52) est dans son deuxième état.

7. Système (1) selon la revendication 6, **caractérisé en ce que** l'élément (52) de recombinaison comporte une matrice de micro-miroirs, chaque micro-miroir étant apte à présenter lesdits premier et deuxième états.

8. Système (1) selon l'une quelconque des revendications précédentes, **caractérisé en ce que** l'élément (52) de recombinaison est plan.

9. Système (1) selon l'une quelconque des revendications 1 à 7, **caractérisé en ce que** l'élément (52) de recombinaison est courbé.

10. Système (1) selon la revendication 9, **caractérisé en ce que** l'élément (52) de recombinaison est associé à une optique secondaire (54) interposée entre la première matrice (2) et l'élément de recombinaison et apte à compenser des déformations générées par l'élément (52) de recombinaison.

11. Système (1) selon l'une quelconque des revendications 5 à 7, **caractérisé en ce que** l'allumage des sources lumineuses de la première matrice (2) et l'allumage des sources lumineuses de la deuxième matrice (51) sont pilotés respectivement par un premier signal (S₂) et un deuxième signal (S₅₁) sensiblement en opposition de phase.

12. Système (1) selon la revendication 11, **caractérisé en ce que** le premier signal (S₂) et le deuxième signal (S₅₁) ont des rapports cycliques ajustables.

13. Système (1) selon l'une quelconque des revendications 11 et 12, **caractérisé en ce que** le basculement du moyen d'obturation (52) entre son premier état et son deuxième état est piloté par un troisième signal (S₅₂) sensiblement synchronisé avec le premier et/ou le deuxième signal (S₅₁).

14. Système(1) selon la revendication 13, **caractérisé en ce que** le premier signal (S₂), le deuxième signal (S₅₁) et le troisième signal (S₅₂) sont générés par un même module (4) électronique de contrôle.

15. Projecteur d'éclairage pour véhicule automobile, **caractérisé en ce qu'**il comporte au moins un système (1) lumineux selon l'une quelconque des revendications 1 à 10.
